# EUROPEAN PATENT SPECIFICATION

(11) **EP 3 425 992 B1**
(45) Date of publication and mention of the grant of the patent: **04.11.2020**
(21) Application number: 16895974.0
(22) Date of filing: 31.03.2016
(51) Int. Cl.: H04W 28/16, H04W 76/30

(54) **EVENT REPORTING METHOD AND DEVICE**
EREIGNISMELDEVERFAHREN UND -VORRICHTUNG
PROCÉDÉ ET DISPOSITIF DE RAPPORT D'ÉVÉNEMENT

(43) Date of publication of application: 09.01.2019
(73) Proprietor: Huawei Technologies Co., Ltd., Longgang District Shenzhen, Guangdong 518129 (CN)
(72) Inventor: LU, Wei, Shenzhen Guangdong 518129 (CN); LI, Lingjie, Shenzhen Guangdong 518129 (CN); HE, Guangwei, Shenzhen Guangdong 518129 (CN)
(74) Representative: Goddar, Heinz J.
(86) International application number: PCT/CN2016/078054
(87) International publication number: WO 2017/166194

(56) References cited:
- EP-A1- 2 824 951
- EP-A1- 2 947 906
- WO-A1-2011/057672
- CN-A- 101 291 233
- CN-A- 102 625 272
- CN-A- 102 625 272
- CN-A- 103 828 476
- ERICSSON ET AL: "ADC rule handling as PCEF enhancement", 3GPP DRAFT; S2-112283_ADC_RULES_DP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, 9 May 2012 (2012-05-09), XP050632420, [retrieved on 2012-05-09]

## Description

### TECHNICAL FIELD

The present invention relates to the field of communications technologies, and in particular, to an event reporting method and an apparatus.

### BACKGROUND

To address a challenge brought by wireless broadband technologies and keep a leading position of a 3rd Generation Partnership Project (3rd Generation Partnership Project, 3GPP) network, the 3GPP formulates a Long Term Evolution (Long Term Evolution, LTE) project for a mobile communications network. Under the direction of the project, a new mobile communications network architecture is defined, namely, an architecture of a System Architecture Evolution (System Architecture Evolution, SAE) network.

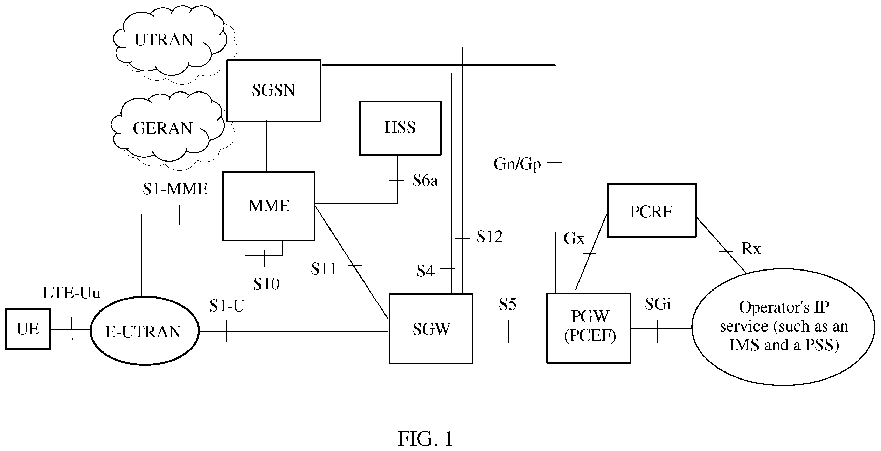

FIG. 1 is a schematic architectural diagram of an SAE network in the prior art. As shown in FIG. 1, when user equipment (User Equipment, UE) accesses the SAE network by using a serving general packet radio system support node (Serving General Packet Radio System Support Node, SGSN), the UE may access a serving gateway (Serving Gateway, SGW) by using an S4 interface, and then access a packet data network gateway (Packet Data Network Gateway, PDN-GW or PGW) by using an S5 interface. Alternatively, the UE may directly access the PGW by using a Gn/Gp interface. Functions of main network elements in the SAE network are described as follows:

A mobility management entity (Mobility Management Entity, MME) is mainly responsible for functions in an evolved universal mobile telecommunications system terrestrial radio access network (Evolved UMTS Terrestrial Radio Access Network, E-UTRAN), such as UE mobility management, session management, encryption and integrity protection of non-access stratum (Non-Access Stratum, NAS) signaling, temporary identifier allocation for the UE, and PGW and SGW selection. The MME corresponds to a control plane part of the SGSN in a Universal Mobile Telecommunications System (Universal Mobile Telecommunications System, UMTS).

The SGW is mainly responsible for relaying a user service flow between the UE and the PGW, and is used as an anchor during handover between base stations.

The PGW is mainly responsible for user address allocation, execution of policy control and a charging rule, and a function related to lawful interception.

A policy and charging rules function (Policy and Charging Rules Function, PCRF) entity: the functional entity determines a corresponding policy based on a restriction on a user's access to a network, an operator policy, user subscription data, information about a service currently being performed by a user, and the like, and provides the policy to a transmission gateway for execution, so as to implement policy charging control.

A home subscriber server (Home Subscriber Server, HSS) is responsible for storing user subscription information.

An operator's IP services (Operator's IP Services): the operator's IP (Internet Protocol, Internet Protocol) services are implemented in an LTE network by using an IP multimedia subsystem (IP Multimedia Subsystem, IMS) network. In addition, a packet-switched streaming service (Packet Switched Streaming Service, PSS) technology is a technology that is used for providing a streaming service to the user and that is defined by the 3GPP. A PSS network architecture mainly includes a mobile terminal and a PSS server that is on a network side.

The PCRF entity is a functional entity in a policy and charging control (Policy and Charging Control, PCC) architecture. The PCC architecture provides a quality of service (Quality of Service, QoS) control function and a data stream charging function for a radio bearer network, and the PCC architecture further includes a policy and charging enforcement function (Policy and Charging Enforcement Function, PCEF) entity. The PCEF entity is usually located in a gateway, and is configured to execute a PCC rule sent by the PCRF entity, to implement functions such as detection of a service data flow, gating control, QoS guarantee of the service data flow, and flow-based charging. The PCC rule is used to identify a service, recognize a service to which a packet belongs, and provide policy control information, service charging information, and the like.

In the PCC architecture, data transmission is managed per data stream. However, data transmission is managed per bearer between the PGW, the SGW, and the E-UTRAN. After the data stream starts to be transmitted, the PCRF entity delivers the PCC rule to the PCEF entity, and the PCC rule carries QoS information of the data stream, so that the PCEF entity binds the data stream to a corresponding bearer based on the QoS information. However, in practice, it is found that the foregoing binding mechanism may cause a waste of network resources.
EP 2 947 906 A1 describes a charging method, a TDF entity, a PCEF entity, a charging system, a PCRF entity, and a system. A correlation identifier is carried in charging information, so that correlation processing may be performed for charging information of a data flow and charging information of an application.
EP 2 824 951 A1 describes a technique for marking a service data packet. A method includes: requesting a traffic detection function TDF to detect a data flow description corresponding to a service application type or data flow starting or ending information corresponding to the service application type; receiving, transmitted by the TDF, the detected data flow description or a data flow starting or ending information report, and generating a data packet marking rule according to the data flow description or the data flow starting or ending information report; and transmitting, to a bearer binding function entity BBF, a session modification message carrying the data packet marking rule, so that the BBF can map a data flow identified by the session modification message to a bearer according to the session modification message.
3GPP TSG SA WG2 Meeting #85, TD S2-112283, "ADC rule handling as PCEF enhancement" (Ericsson et al.) identifies problems with combining application detection with PCC rules and it is suggested that application detection aspects (ADC rules) should be separated from the PCC rules, also when the PCED is enhanced with TDF capabilities.

### SUMMARY

Embodiments of the present invention describe an event reporting method and an apparatus, so as to resolve a waste of network resources.

According to one aspect, an embodiment of the present invention provides an event reporting method. The method includes: receiving, by a policy and charging rules function PCRF entity, a first message sent by a traffic detection function TDF entity, where the first message includes a start event, and the start event is used to notify the PCRF entity that a data stream starts to be transmitted; sending, by the PCRF entity, a second message to a PCEF entity or the TDF entity, where the second message is used by the PCEF entity or the TDF entity to send a stop event to the PCRF entity, and the stop event is used to notify the PCRF entity that the transmission of the data stream stops; and receiving, by the PCRF entity, the stop event sent by the PCEF entity or the TDF entity. Further, the PCRF entity unbinds the foregoing data stream from a corresponding bearer. In this way, the PCRF entity can receive the stop event to learn that the transmission of the data stream stops, so that after the transmission of the data stream stops, the PCRF entity unbinds the data stream from the corresponding bearer to release the bearer, reducing a waste of network resources.

In a possible design, the first message may further include 5-tuple information of the data stream, and the sending, by the PCRF entity, a second message to a PCEF entity or the TDF entity may include: sending, by the PCRF entity, a reporting instruction of the stop event and the 5-tuple information of the data stream to the PCEF entity, where the 5-tuple information of the data stream is used by the PCEF entity to detect the data stream, and the reporting instruction of the stop event is used to instruct the PCEF entity to send the stop event to the PCRF entity when the transmission of the data stream stops. For example, the PCRF entity may send a second rule to the PCEF entity, and the second rule includes the reporting instruction of the stop event and the 5-tuple information of the data stream. Therefore, the PCRF entity may instruct the PCEF entity to report the stop event, so as to learn, in a timely manner, that the transmission of the data stream stops.

In a possible design, the PCRF entity may further deliver a first rule to the TDF entity, the first rule includes an identifier and a reporting instruction of the start event, and the identifier is used to identify the data stream. In this way, the PCRF entity may learn, in a timely manner, that the data stream starts to be transmitted. In addition, when the first rule does not include the reporting instruction of the stop event, a network transmission resource may be saved.

In a possible design, the sending, by the PCRF entity, a second message to a PCEF entity or the TDF entity may include: sending, by the PCRF entity, an identifier of the data stream and a reporting instruction of the stop event to the TDF entity, where the reporting instruction of the stop event is used to instruct the TDF entity to send the stop event to the PCRF entity when the transmission of the data stream stops. For example, the PCRF entity may send a third rule to the TDF entity, and the third rule includes the identifier of the data stream and the reporting instruction of the stop event. Therefore, the PCRF entity may instruct the TDF entity to report the stop event, so as to learn, in a timely manner, that the transmission of the data stream stops.

In a possible design, the second message may further include a notification, where the notification is used to notify the TDF entity that the reporting instruction of the stop event is valid before the transmission of the data stream stops; or the PCRF entity may further send a notification to the TDF entity, where the notification is used to notify the TDF entity that the reporting instruction of the stop event is valid before the transmission of the data stream stops. In this way, the PCRF entity may learn, in a timely manner, that the transmission of the data stream stops, and the PCRF entity does not need to additionally send the reporting instruction of the stop event, so that a network transmission resource is saved and a change to an existing procedure is relatively slight.

In a possible design, the PCRF entity may further send modification information to the PCEF entity or the TDF entity, where the modification information is used by the PCEF entity or the TDF entity to send the stop event to the PCRF entity when transmission of a downlink data stream of the data stream stops. Alternatively, the PCRF entity may also enable, by sending other information to the PCEF entity or the TDF entity or in any another manner, the PCEF entity or the TDF entity to send the stop event to the PCRF entity when the transmission of the downlink data stream of the data stream stops. In this way, the PCRF entity may learn, in a timely manner, that the transmission of the data stream stops, and the PCEF entity or the TDF entity only needs to detect whether the downlink data stream stops, saving a CPU resource of the PCEF entity or the TDF entity.

In a possible design, the PCRF entity may further send 5-tuple information of an uplink data stream of the data stream to the PCEF entity or the TDF entity, so that the PCEF entity or the TDF entity processes the uplink data stream of the data stream. For example, the PCRF entity may send a fourth rule to the PCEF entity or the TDF entity, where the fourth rule includes the 5-tuple information of the uplink data stream of the data stream, or the fourth rule may further include a quality of service policy of the uplink data stream of the data stream. In this way, the PCEF entity or the TDF entity may separately process the uplink data stream and the downlink data stream of the data stream, so that a change to the existing procedure is relatively slight and an existing device does not need to be changed.

According to another aspect, an embodiment of the present invention provides an event reporting method. The method includes: receiving, by a policy and charging enforcement function PCEF entity, a message sent by a policy and charging rules function PCRF entity, where the message is used by the PCEF entity to send a stop event to the PCRF entity, and the stop event is used to notify the PCRF entity that transmission of a data stream stops; detecting, by the PCEF entity, the data stream based on the message; and when the transmission of the data stream stops, sending, by the PCEF entity, the stop event to the PCRF entity. In this way, the PCEF entity reports the stop event to the PCRF entity, so that the PCRF entity learns, in a timely manner, that the transmission of the data stream stops, and performs a subsequent operation related to unbinding the bearer, so as to resolve a problem of a waste of bearer resources.

In a possible design, the message includes 5-tuple information of the data stream and a reporting instruction of the stop event, the reporting instruction of the stop event is used to instruct the PCEF entity to send the stop event to the PCRF entity when the transmission of the data stream stops, and the PCEF entity may detect a data stream corresponding to the 5-tuple information of the data stream.

In a possible design, the PCEF entity receives modification information and an identifier of a downlink data stream of the data stream that are sent by the PCRF entity, where the modification information is used by the PCEF entity to send the stop event to the PCRF entity when the transmission of the downlink data stream of the data stream stops. In this way, the PCEF entity only needs to detect whether the downlink data stream stops, saving a CPU resource of the PCEF entity.

In a possible design, the PCEF entity receives 5-tuple information that is of an uplink data stream of the data stream and that is sent by the PCRF entity, so that the PCEF entity processes the uplink data stream of the data stream. In this way, the PCEF entity may separately process the uplink data stream and the downlink data stream of the data stream, so that a change to the existing procedure is relatively slight and an existing device does not need to be changed.

According to still another aspect, an embodiment of the present invention provides an event reporting method. The method includes: sending, by a TDF entity, a first message to a policy and charging rules function PCRF entity, where the first message includes a start event, and the start event is used to notify the PCRF entity that a data stream starts to be transmitted; receiving, by the TDF entity, a second message sent by the PCRF entity, where the second message is used by the TDF entity to send a stop event to the PCRF entity, and the stop event is used to notify the PCRF entity that the transmission of the data stream stops; detecting, by the TDF entity, the data stream based on the second message; and when the transmission of the data stream stops, sending, by the TDF entity, the stop event to the PCRF entity. In this way, the TDF entity reports the stop event to the PCRF entity, so that the PCRF entity learns, in a timely manner, that the transmission of the data stream stops, and performs a subsequent operation related to unbinding the bearer, so as to resolve a problem of a waste of bearer resources.

In a possible design, the receiving, by the TDF entity, a second message sent by the PCRF entity may include: receiving, by the TDF entity, an identifier of the data stream and a reporting instruction of the stop event that are sent by the PCRF entity, where the reporting instruction of the stop event is used to instruct the TDF entity to send the stop event to the PCRF entity when the transmission of the data stream stops. For example, the TDF entity receives a third rule sent by the PCRF entity, and the third rule includes the identifier of the data stream and the reporting instruction of the stop event.

In a possible design, the second message may further include a notification, where the notification is used to notify the TDF entity that the reporting instruction of the stop event is valid before the transmission of the data stream stops; or the TDF entity may further receive a notification sent by the PCRF entity, where the notification is used to notify the TDF entity that the reporting instruction of the stop event is valid before the transmission of the data stream stops. In a possible design, the TDF entity receives modification information and an identifier of a downlink data stream of the data stream that are sent by the PCRF entity, where the modification information is used by the TDF entity to send the stop event to the PCRF entity when the transmission of the downlink data stream of the data stream stops. In this way, the TDF entity only needs to detect whether the downlink data stream stops, saving a CPU resource of the TDF entity.

In a possible design, the TDF entity receives 5-tuple information that is of an uplink data stream of the data stream and that is sent by the PCRF entity, so that the TDF entity processes the uplink data stream of the data stream. In this way, the TDF entity may separately process the uplink data stream and the downlink data stream of the data stream, so that a change to the existing procedure is relatively slight and an existing device does not need to be changed.

According to still another aspect, an embodiment of the present invention provides a policy and charging rules function PCRF entity, and the PCRF entity has a function of implementing behavior of the PCRF entity in the foregoing method designs. The function may be implemented by hardware, or may be implemented by hardware by executing corresponding software. The hardware or software includes one or more modules corresponding to the foregoing function. The module may be software and/or hardware.

In a possible design, a structure of the PCRF entity includes a processor and a transceiver. The processor is configured to support the PCRF entity in performing a corresponding function in the foregoing methods. The transceiver is configured to support the PCRF entity in communicating with another network element. The PCRF entity may further include a memory. The memory is configured to: be coupled to the processor, and store a program instruction and data that are required by the PCRF entity.

According to still another aspect, an embodiment of the present invention provides a policy and charging enforcement function PCEF entity, and the PCEF entity has a function of implementing behavior of the PCEF entity in the foregoing method designs. The function may be implemented by hardware, or may be implemented by hardware by executing corresponding software. The hardware or software includes one or more modules corresponding to the foregoing function. The module may be software and/or hardware.

In a possible design, a structure of the PCEF entity includes a processor and a transceiver. The processor is configured to support the PCEF entity in performing a corresponding function in the foregoing methods. The transceiver is configured to support the PCEF entity in communicating with another network element. The PCEF entity may further include a memory. The memory is configured to: be coupled to the processor, and store a program instruction and data that are required by the PCEF entity.

According to still another aspect, an embodiment of the present invention provides a traffic detection function TDF entity, and the TDF entity has a function of implementing behavior of the TDF entity in the foregoing method designs. The function may be implemented by hardware, or may be implemented by hardware by executing corresponding software. The hardware or software includes one or more modules corresponding to the foregoing function. The module may be software and/or hardware.

In a possible design, a structure of the TDF entity includes a processor and a transceiver. The processor is configured to support the TDF entity in performing a corresponding function in the foregoing methods. The transceiver is configured to support the TDF entity in communicating with another network element. The TDF entity may further include a memory. The memory is configured to: be coupled to the processor, and store a program instruction and data that are required by the TDF entity.

According to still another aspect, an embodiment of the present invention provides an integrated device, and the integrated device has a function of implementing behavior of the PCEF entity and the TDF entity in the foregoing method designs. The function may be implemented by hardware, or may be implemented by hardware by executing corresponding software. The hardware or software includes one or more modules corresponding to the foregoing function. The module may be software and/or hardware.

In a possible design, a structure of the integrated device includes a processor and a transceiver. The processor is configured to support the integrated device in performing a corresponding function in the foregoing methods. The transceiver is configured to support the integrated device in communicating with another network element. The integrated device may further include a memory. The memory is configured to: be coupled to the processor, and store a program instruction and data that are required by the integrated device.

According to still another aspect, an embodiment of the present invention provides a communications system, where the system includes the PCRF entity and the TDF entity in the foregoing aspects; or the system includes the PCRF entity, the TDF entity, and the PCEF entity in the foregoing aspects; or the system includes the PCRF entity and the integrated device in the foregoing aspects.

According to yet another aspect, an embodiment of the present invention provides a computer storage medium, configured to store a computer software instruction used by the PCRF entity, and the computer storage medium includes a program designed for performing the foregoing aspects.

According to yet another aspect, an embodiment of the present invention provides a computer storage medium, configured to store a computer software instruction used by the PCEF entity, and the computer storage medium includes a program designed for performing the foregoing aspects.

According to yet another aspect, an embodiment of the present invention provides a computer storage medium, configured to store a computer software instruction used by the TDF entity, and the computer storage medium includes a program designed for performing the foregoing aspects.

According to yet another aspect, an embodiment of the present invention provides a computer storage medium, configured to store a computer software instruction used by the integrated device, and the computer storage medium includes a program designed for performing the foregoing aspects.

Compared with the prior art, in the embodiments of the present invention, the PCRF entity sends the second message to the PCEF entity or the TDF entity, where the second message is used by the PCEF entity or the TDF entity to send the stop event to the PCRF entity and the stop event is used to notify the PCRF entity that the transmission of the data stream stops, so that the PCRF entity can receive, after receiving the start event and learning that the data stream starts to be transmitted, the stop event to learn that the transmission of the data stream stops. Therefore, after the transmission of the data stream stops, the PCRF entity may unbind the data stream from the corresponding bearer to release the bearer, reducing the waste of the network resources.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may derive other drawings from these accompanying drawings without creative efforts.
FIG. 1 is a schematic diagram of an SAE architecture in the prior art;
FIG. 2 is a schematic diagram of a PCC architecture according to an embodiment of the present invention;
FIG. 3 is a schematic diagram of another PCC architecture according to an embodiment of the present invention;
FIG. 4 is a schematic flowchart of an event reporting method according to an embodiment of the present invention;
FIG. 5 is a schematic diagram of communication of another event reporting method according to an embodiment of the present invention;
FIG. 6 is a schematic diagram of communication of still another event reporting method according to an embodiment of the present invention;
FIG. 7 is a schematic diagram of communication of still another event reporting method according to an embodiment of the present invention;
FIG. 8A is a schematic structural diagram of a PCRF entity according to an embodiment of the present invention;
FIG. 8B is a schematic structural diagram of another PCRF entity according to an embodiment of the present invention;
FIG. 9A is a schematic structural diagram of a PCEF entity according to an embodiment of the present invention;
FIG. 9B is a schematic structural diagram of another PCEF entity according to an embodiment of the present invention;
FIG. 10A is a schematic structural diagram of a TDF entity according to an embodiment of the present invention; and
FIG. 10B is a schematic structural diagram of another TDF entity according to an embodiment of the present invention.

### DESCRIPTION OF EMBODIMENTS

To make the objectives, technical solutions, and advantages of the present invention clearer, the following describes the technical solutions of the embodiments of the present invention with reference to the accompanying drawings.

In an existing data transmission process, after a data stream starts to be transmitted, a PCRF entity delivers a PCC rule to a PCEF entity. Therefore, after the PCEF entity binds the data stream to a corresponding bearer, the PCRF entity retains the corresponding bearer for the data stream because the PCRF entity cannot learn whether the data stream stops or when to stop. Therefore, even after the transmission of the foregoing data stream stops, the corresponding bearer of the data stream cannot be released, thereby causing a waste of network resources.

For this purpose, embodiments of the present invention provide an event reporting method and an apparatus, so as to resolve a problem of the waste of the network resources. The method and the apparatus are based on a same inventive concept. Because problem resolving principles of the method and the apparatus are similar, mutual reference may be made to implementations of the method and the apparatus, and no repeated description is provided.

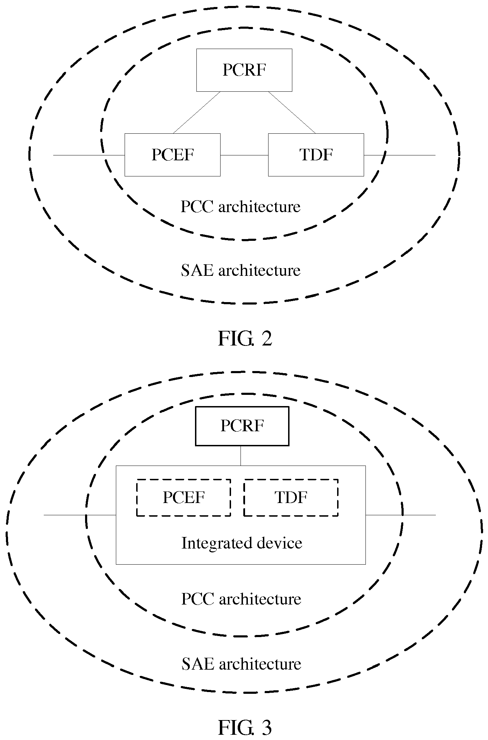

To clearly describe the solutions in the embodiments of the present invention, a service scenario and a system architecture that may be used in the embodiments of the present invention are described below with reference to FIG. 2 and FIG. 3.

FIG. 2 shows a possible system architecture according to an embodiment of the present invention. As shown in FIG. 2, a PCC architecture is a part of an SAE architecture, and an overall architecture of the SAE architecture is shown in FIG. 1. Here, for brevity, only the PCC architecture is described. As shown in FIG. 2, the PCC architecture includes a PCRF entity, a PCEF entity, and a traffic detection function (Traffic Detection Function, TDF) entity, and the TDF entity may perform application detection and policy execution based on an application detection and control (Application Detection and Control, ADC) rule delivered by the PCRF entity. In the PCC architecture shown in FIG. 1, the PCEF entity and the TDF entity are separately deployed, in other words, the PCEF entity and the TDF entity are deployed in different physical devices. The PCEF entity and the PCRF entity may communicate with each other by using a Gx interface, and the TDF entity and the PCRF entity may communicate with each other by using an Sd interface.

FIG. 3 shows another possible system architecture according to an embodiment of the present invention. In FIG. 3, for content that is the same as or similar to that in FIG. 2, refer to a detailed description in FIG. 2, and details are not described herein again. Different from the system architecture shown in FIG. 2, in the PCC architecture shown in FIG. 3, a PCEF entity and a TDF entity are deployed in a same physical device, and for ease of description, the same physical device is subsequently referred to as an integrated device. The integrated device integrates functions of the PCEF entity and the TDF entity, and may internally include a separate module that has a PCEF entity function and a separate module that has a TDF entity function, or may not externally present the foregoing separate modules.

It should be noted that the foregoing PCC architectures shown in FIG. 2 and FIG. 3 may further include another functional entity such as an application function (Application function, AF) entity, a bearer binding and event reporting function (Bearing Binding and Event Report Function, BBERF) entity, a subscription profile repository (Subscription Profile Repository, SPR), an online charging system (Online Charging System, OCS), and an offline charging system (Offline Charging System, OFCS).

It may be understood that the network architecture and the service scenario described in the embodiments of the present invention are intended to describe the technical solutions in the embodiments of the present invention more clearly, and impose no limitation on the technical solutions provided in the embodiments of the present invention. A person of ordinary skill in the art may know that, with evolution of the network architecture and emergence of a new service scenario, the technical solutions provided in the embodiments of the present invention are also applicable to a similar technical problem.

Based on foregoing common aspects included in the embodiments of the present invention, the following further describes the embodiments of the present invention in detail.

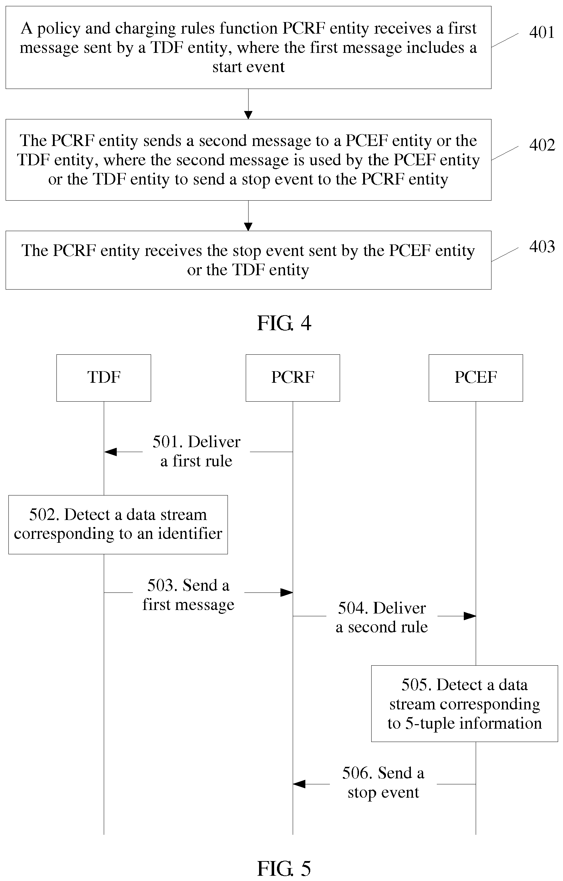

An embodiment of the present invention provides an event reporting method, an apparatus based on the method, such as a PCRF entity, a PCEF entity, and a TDF entity, and a system based on the method. As shown in FIG. 4, the method may include steps 401 to 403, and step 402 may be performed after step 401, or may be performed before step 401. In step 401, a PCRF entity receives a first message sent by a TDF entity, where the first message includes a start event, and the start event is used to notify the PCRF entity that a data stream starts to be transmitted. In step 402, the PCRF entity sends a second message to a PCEF entity or a TDF entity, where the second message is used by the PCEF entity or the TDF entity to send a stop event to the PCRF entity, and the stop event is used to notify the PCRF entity that the transmission of the data stream stops. For example, when the first message further includes 5-tuple information of the data stream, the second message may include a reporting instruction of the stop event and the 5-tuple information, and the PCRF entity may deliver, to the PCEF entity, a rule that includes the reporting instruction of the stop event and the 5-tuple information, so that the PCEF entity may detect the data stream based on the 5-tuple information in the rule. For example, the rule may be a PCC rule. When the transmission of the data stream stops, the PCEF entity may send the stop event to the PCRF entity. For another example, the second message may include the reporting instruction of the stop event. Before receiving the message sent by the TDF entity, the PCRF entity may deliver another rule such as an ADC rule to the TDF entity, and the another rule may include a reporting instruction of the start event, an identifier used to identify the data stream, and the reporting instruction of the stop event. When sending the another rule, the PCRF entity may further notify the TDF entity that the reporting instruction of the stop event is valid before the transmission of the data stream stops, for example, may notify the TDF entity by using the another rule, or may notify the TDF entity in another manner, so that the TDF entity may continue to detect the data stream based on the identifier after sending the start event to the PCRF entity, and send the stop event to the PCRF entity when the transmission of the data stream stops. Correspondingly, after receiving the second message, the PCEF entity or the TDF entity detects the data stream based on the second message. When the transmission of the data stream stops, the PCEF entity or the TDF entity sends the stop event to the PCRF entity. In step 403, the PCRF entity receives the stop event sent by the PCEF entity or the TDF entity. Before the transmission of the data stream stops, the PCRF entity may further enable, in any manner, the PCEF entity or the TDF entity to send the stop event to the PCRF entity when transmission of a downlink data stream of the data stream stops. Further, after receiving the stop event, the PCRF entity may further unbind the data stream from a corresponding bearer.

Compared with the prior art, in the solutions provided in the embodiments of the present invention, the PCRF entity sends the second message to the PCEF entity or the TDF entity, where the second message is used by the PCEF entity or the TDF entity to send the stop event to the PCRF entity, so that the PCRF entity can receive, after receiving the start event and learning that the data stream starts to be transmitted, the stop event to learn that the transmission of the data stream stops. Therefore, after the transmission of the data stream stops, the PCRF entity may unbind the data stream from the corresponding bearer to release the bearer, reducing a waste of network resources.

The following further describes the solutions provided in the embodiments of the present invention with reference to FIG. 5 to FIG. 7.

FIG. 5 is a schematic diagram of communication of another event reporting method according to an embodiment of the present invention. As shown in FIG. 5, the event reporting method may include steps 501 to 506.

In step 501, a PCRF entity delivers a first rule to a TDF entity.

The first rule includes an identifier and a reporting instruction of the start event. The start event is used to notify the PCRF entity that a data stream starts to be transmitted, and the identifier is used to identify the data stream. For example, the identifier may be an application identifier. The first rule may be an ADC rule.

For example, the first rule may further include a reporting instruction of a stop event, and the stop event is used to notify the PCRF entity that the transmission of the data stream stops. The first rule that includes the identifier and the reporting instruction of the start event is delivered to the TDF entity, so that the TDF entity may detect, in a timely manner, whether the data stream corresponding to the identifier starts to be transmitted, and report the start event to the PCRF when detecting that the data stream corresponding to the identifier starts to be transmitted. Therefore, the PCRF entity may learn, in a timely manner, that the data stream starts to be transmitted.

In step 502, the TDF detects a data stream corresponding to the identifier.

After receiving the first rule, the TDF entity detects, based on the reporting instruction of the start event, the data stream identified by the identifier, and performs step 503 when detecting that the data stream identified by the identifier starts to be transmitted.

In step 503, the TDF entity sends a first message to the PCRF entity, where the first message includes a start event.

For example, the first message further includes 5-tuple information of the data stream. The 5-tuple information includes five pieces of information: a source IP address, a source port, a destination IP address, a destination port, and a transport layer protocol. For example, a 5-tuple includes 192.168.1.1, 10000, TCP, 121.14.88.76, and 80.

In step 504, the PCRF entity delivers a second rule to a PCEF entity.

After receiving the start event, the PCRF entity learns that the data stream starts to be transmitted, and generates the second rule. For example, the second rule may be a PCC rule. The second rule includes the reporting instruction of the stop event and the 5-tuple information.

For example, the second rule may further include a quality of service policy or a charging policy of the data stream, or the like. Then correspondingly, after receiving the second rule, the PCEF may bind, based on the quality of service policy in the second rule, the data stream corresponding to the 5-tuple information to a corresponding bearer, or perform, based on the charging policy in the second rule, charging on the data stream corresponding to the 5-tuple information.

In step 505, the PCEF entity detects a data stream corresponding to the 5-tuple information.

After receiving the reporting instruction of the stop event, the PCEF entity detects the corresponding data stream based on the 5-tuple information, and performs step 506 when detecting that the transmission of the data stream identified by the 5-tuple information stops.

In step 506, the PCEF entity sends a stop event to the PCRF entity.

By performing steps 504 to 506, the PCRF entity may learn, based on the stop event reported by the PCEF entity, that the transmission of the data stream stops. Therefore, even if the first rule does not include the reporting instruction of the stop event, the PCRF entity can also learn, in a timely manner, that the transmission of the data stream stops.

In an existing procedure, after the first rule (such as the ADC rule) is delivered, if the PCRF entity sends the second rule (such as the PCC rule) to the PCEF entity, the first rule is no longer executed. To be specific, the TDF entity does not detect whether the data stream stops, and does not report the stop event to the PCRF entity. However, in the solution shown in FIG. 5, by performing steps 504 to 506, the reporting instruction of the stop event is added to the second rule sent by the PCRF entity to the PCEF entity, so that after receiving the second rule, the PCEF entity may detect whether the data stream stops, and report the stop event to the PCRF entity when the data stream stops. Therefore, the PCRF entity may learn, in a timely manner, that the transmission of the data stream has stopped, and perform a subsequent operation related to unbinding the bearer.

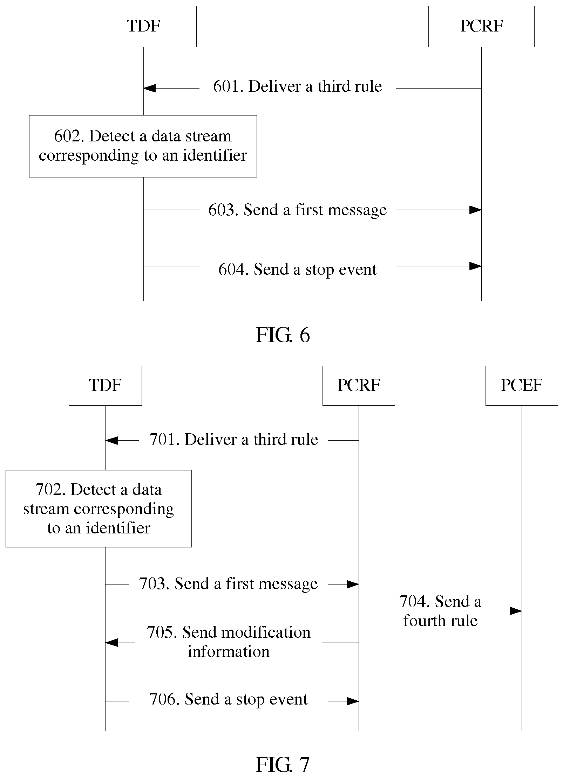

FIG. 6 is a schematic diagram of communication of still another event reporting method according to an embodiment of the present invention. In the method shown in FIG. 6, for content that is the same as or similar to that of the method shown in FIG. 3 or FIG. 5, refer to a detailed description in FIG. 3 or FIG. 5, and details are not described herein again. As shown in FIG. 6, the event reporting method may include steps 601 to 604.

In step 601, a PCRF entity delivers a third rule to a TDF entity.

The third rule includes an identifier, a reporting instruction of a start event, and a reporting instruction of a stop event, and the identifier is used to identify a data stream. For example, the identifier may be an application identifier. The third rule may be an ADC rule.

In step 602, the TDF entity detects a data stream corresponding to the identifier.

After receiving the third rule, the TDF entity detects the data stream identified by the identifier. When it is detected that the data stream identified by the identifier starts to be transmitted, step 603 is performed. When it is detected that the transmission of the data stream identified by the identifier stops, step 604 is performed.

For example, the third rule further includes a notification, and the notification is used to notify the TDF entity that the reporting instruction of the stop event is valid before the transmission of the data stream stops. For example, after receiving the third rule, the TDF entity may configure the reporting instruction of the stop event to take effect after the TDF entity sends the start event to the PCRF entity, and remain valid until the transmission of the data stream stops; or after the third rule is delivered, the reporting instruction of the stop event is always valid until the transmission of the data stream stops.

For another example, the PCRF entity may not add the notification to the third rule, but sends the notification to the TDF entity in another manner after the third rule is delivered. A specific implementation is not limited.

For another example, the TDF entity configures a rule in which the reporting instruction of the stop event is valid before the transmission of the data stream stops. To be specific, after the TDF entity receives the third rule, the reporting instruction of the stop event in the third rule starts to take effect after the TDF entity sends the start event to the PCRF entity, and is valid until the transmission of the data stream stops.

In step 603, the TDF entity sends a first message to the PCRF entity, where the first message includes a start event.

For example, after receiving the first message sent by the TDF entity, the PCRF entity may formulate a PCC rule, and deliver the PCC rule to a PCEF entity. The PCC rule may further include 5-tuple information of the data stream, a quality of service policy or a charging policy, and the like. Correspondingly, after receiving the PCC rule, the PCEF entity may bind, based on the quality of service policy in the PCC rule, the data stream corresponding to the 5-tuple information to a corresponding bearer, or perform, based on the charging policy in the PCC rule, charging on the data stream corresponding to the 5-tuple information.

In step 604, the TDF entity sends a stop event to the PCRF entity.

In an existing procedure, when the ADC rule includes the reporting instruction of the stop event, if the PCRF entity sends the PCC rule to the PCEF entity, the reporting instruction of the stop event in the ADC rule is invalid. To be specific, the TDF entity does not detect whether the data stream stops, and does not report the stop event to the PCRF entity. However, in the solution shown in FIG. 6, the PCRF entity notifies the TDF entity that the reporting instruction of the stop event is valid before the transmission of the data stream stops, so that before the transmission of the data stream stops, the TDF entity keeps detecting whether the data stream stops, and sends the stop event to the PCRF when detecting that the data stream stops. Therefore, the PCRF entity may learn, in a timely manner, that the transmission of the data stream has stopped, and perform a subsequent operation related to unbinding the bearer. In addition, by using the solution shown in FIG. 6, the PCRF entity does not need to additionally send the reporting instruction of the stop event, so that a network transmission resource is saved and a change to the existing procedure is relatively slight.

FIG. 7 is a schematic diagram of communication of still another event reporting method according to an embodiment of the present invention. As shown in FIG. 7, the event reporting method may include steps 701 to 706.

In step 701, a PCRF entity delivers a third rule to a TDF entity.

Step 701 is similar to step 601 in FIG. 6. For details, refer to a description of step 601 in FIG. 6. Details are not described herein again.

In step 702, the TDF entity detects a data stream corresponding to an identifier.

Step 702 is similar to step 602 in FIG. 6. For details, refer to a description of step 602 in FIG. 6. Details are not described herein again.

After receiving the third rule, the TDF entity detects the data stream identified by the identifier. When it is detected that the data stream identified by the identifier starts to be transmitted, step 703 is performed.

In step 703, the TDF entity sends a first message to the PCRF entity, where the message includes a start event.

Step 703 is similar to step 603 in FIG. 6. For details, refer to a description of step 603 in FIG. 6. Details are not described herein again.

For example, the first message further includes 5-tuple information of an uplink data stream of the data stream.

In step 704, the PCRF entity sends a fourth rule to a PCEF entity.

The fourth rule includes at least one of the 5-tuple information of the uplink data stream of the data stream and a quality of service policy of the uplink data stream of the data stream. The fourth rule may be a PCC rule.

For example, after receiving the fourth rule, the PCEF entity may bind, based on the quality of service policy in the fourth rule, the uplink data stream corresponding to the 5-tuple information to a corresponding bearer, for example, generate a traffic flow template (Traffic Flow Template, TFT), and notify a terminal device, and the terminal device binds the bearer of the uplink data stream.

In step 705, the PCRF entity sends modification information to the TDF entity.

The modification information is used by the TDF entity to send the stop event to the PCRF entity when transmission of a downlink data stream of the data stream stops. It may be understood that a manner of sending the modification information herein is merely used as an example, and the PCRF entity may also enable, by sending other information or in any another manner, the TDF entity to send the stop event to the PCRF entity when the transmission of the downlink data stream of the data stream stops.

In step 706, the TDF entity sends a stop event to the PCRF entity.

When detecting that the transmission of the downlink data stream of the data stream stops, the TDF entity sends the stop event to the PCRF entity.

For example, the TDF entity detects a data stream corresponding to a particular application, and the data stream corresponding to the application includes only a downlink data stream or the application has a small amount of data transmitted in an uplink direction. When detecting that the transmission of the downlink data stream corresponding to the application stops, the TDF entity may consider that data transmission corresponding to the application has ended and therefore send the stop event to the PCRF entity.

In the solution shown in FIG. 7, there is no limitation on an execution sequence of step 704 and step 705. Step 704 may be performed before step 705, or step 705 may be performed before step 704, or step 704 and step 705 may be performed at the same time. In an actual application, in some cases, in a process of using the application by a user, there is only the downlink data stream, for example, watching a video and browsing news. Therefore, when it is detected that the downlink data stream stops, it may be considered that both an uplink data stream and the downlink data stream have stopped. By performing steps 705 and 706, the PCRF entity may enable the TDF entity to only detect whether the transmission of the downlink data stream stops, and does not need to detect whether the transmission of the uplink data stream stops. When detecting that the transmission of the downlink data stream stops, the TDF entity reports the stop event to the PCRF entity, so that the PCRF entity can more quickly learn whether the transmission of the data stream stops, saving a CPU resource of the TDF entity.

It should be noted that in the solution shown in FIG. 7, when receiving the start event, the PCRF entity may separately process uplink and downlink data streams of the data stream. To be specific, a related operation of the uplink data stream is performed by the PCEF entity by performing step 704, and a related operation of the downlink data stream is performed by the TDF entity by performing step 705. In this manner of separately processing the uplink and downlink data streams, CPU resources of the TDF entity and the PCEF entity can be saved, a change to an existing procedure is relatively slight, and an existing device does not need to be changed.

It should be noted that the methods described in FIG. 4 to FIG. 7 may be applicable to the architecture shown in FIG. 2 or FIG. 3. When the methods described in FIG. 4 to FIG. 7 are applicable to the architecture shown in FIG. 2, the PCRF entity, the TDF entity, and the PCEF entity in FIG. 2 may correspondingly perform respective functions. When the methods described in FIG. 4 to FIG. 7 are applicable to the architecture shown in FIG. 3, the PCRF entity in FIG. 3 may correspondingly perform a respective function, and functions corresponding to the TDF entity and the PCEF entity in the method example may be implemented by an integrated device.

The foregoing mainly describes the solutions provided in the embodiments of the present invention from a perspective of interaction between network elements. It may be understood that, to implement the foregoing functions, each network element, such as the PCRF entity, the PCEF entity, and the TDF entity, includes a corresponding hardware structure and/or software module for performing each function. A person skilled in the art should be easily aware that, with reference to units and algorithm steps in the examples described in the embodiments provided in this specification, the present invention can be implemented in a form of hardware or a combination of hardware and computer software. Whether a function is performed by hardware or hardware driven by computer software depends on particular applications and design constraints of the technical solutions. A person skilled in the art may use different methods to perform the described functions for each particular application, but it should not be considered that the implementation goes beyond the scope of the present invention.

In the embodiments of the present invention, division of functional units may be performed on the PCRF entity, the PCEF entity, and the TDF entity based on the foregoing method examples. For example, each functional unit may be obtained through division based on a corresponding function, or two or more functions may be integrated into one processing unit. The integrated unit may be implemented in a form of hardware, or may be implemented in a form of a software functional unit. It should be noted that the unit division in the embodiments of the present invention is an example, and is only logical function division. There may be another division manner in an actual implementation.

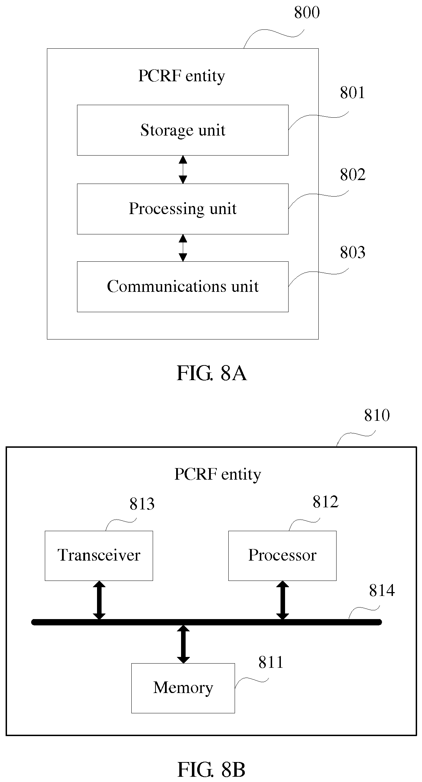

When an integrated unit is used, FIG. 8A shows a possible schematic structural diagram of a PCRF entity in the foregoing embodiments. A PCRF entity 800 includes a processing unit 802 and a communications unit 803. The processing unit 802 is configured to control and manage an action of the PCRF entity. For example, the processing unit 802 is configured to support the PCRF entity in performing steps 401, 402, and 403 in FIG. 4, steps 501 and 504 in FIG. 5, a step 601 in FIG. 6, steps 701, 704, and 705 in FIG. 7, and/or another procedure used for the technology described in this specification. The communications unit 803 is configured to support the PCRF entity in communicating with another network entity, for example, communicating with the functional module or the network entity shown in FIG. 1, FIG. 2, or FIG. 3. The PCRF entity may further include a storage unit 801, configured to store program code and data of the PCRF entity.

The processing unit 802 may be a processor or a controller, for example, may be a central processing unit (Central Processing Unit, CPU), a general purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The processing unit 802 may implement or execute various example logical blocks, modules, and circuits described with reference to content provided in the present invention. The processor may also be a combination of processors performing a computing function, for example, one microprocessor or a combination of more than one microprocessor, or a combination of the DSP and a microprocessor. The communications unit 803 may be a transceiver, a transceiver circuit, a communications interface, or the like. The storage unit 801 may be a memory.

When the processing unit 802 is the processor, the communications unit 803 is the transceiver, and the storage unit 801 is the memory, the PCRF entity provided in this embodiment of the present invention may be a PCRF entity shown in FIG. 8B.

Referring to FIG. 8B, a PCRF entity 810 includes a processor 812, a transceiver 813, a memory 811, and a bus 814. The transceiver 813, the processor 812, and the memory 811 are interconnected by using the bus 814. The bus 814 may be a peripheral component interconnect (Peripheral Component Interconnect, PCI for short) bus, an extended industry standard architecture (Extended Industry Standard Architecture, EISA for short) bus, or the like. The bus 814 may be classified into an address bus, a data bus, a control bus, and the like. For ease of representation, only one thick line is used in FIG. 8B for representation, but it does not indicate that there is only one bus or one type of bus.

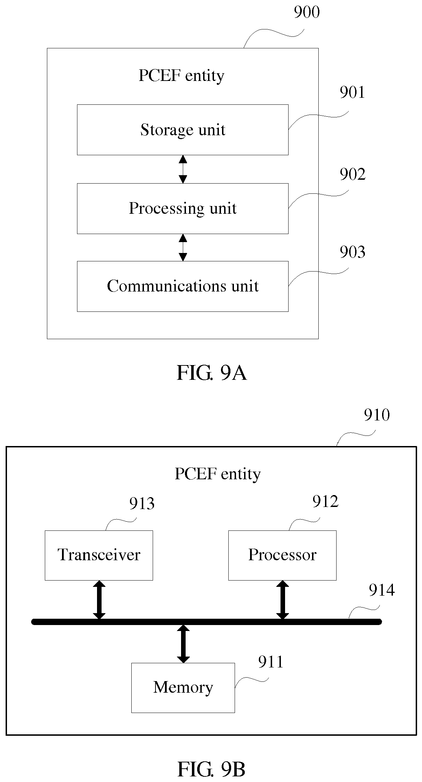

When an integrated unit is used, FIG. 9A shows a possible schematic structural diagram of a PCEF entity in the foregoing embodiments. A PCEF entity 900 includes a processing unit 902 and a communications unit 903. The processing unit 902 is configured to control and manage an action of the PCEF entity. For example, the processing unit 902 is configured to support the PCEF entity in performing steps 505 and 506 in FIG. 5, and/or another procedure used for the technology described in this specification. The communications unit 903 is configured to support the PCEF entity in communicating with another network entity, for example, communicating with the functional module or the network entity shown in FIG. 1, FIG. 2, or FIG. 3. The PCEF entity may further include a storage unit 901, configured to store program code and data of the PCEF entity.

The processing unit 902 may be a processor or a controller, for example, may be a central processing unit (Central Processing Unit, CPU), a general purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The processing unit 902 may implement or execute various example logical blocks, modules, and circuits described with reference to content provided in the present invention. The processor may also be a combination of processors performing a computing function, for example, one microprocessor or a combination of more than one microprocessor, or a combination of the DSP and a microprocessor. The communications unit 903 may be a transceiver, a transceiver circuit, a communications interface, or the like. The storage unit 901 may be a memory.

When the processing unit 902 is the processor, the communications unit 903 is the transceiver, and the storage unit 901 is the memory, the PCEF entity provided in this embodiment of the present invention may be a PCEF entity shown in FIG. 9B.

Referring to FIG. 9B, a PCEF entity 910 includes a processor 912, a transceiver 913, a memory 911, and a bus 914. The transceiver 913, the processor 912, and the memory 911 are interconnected by using the bus 914. The bus 914 may be a peripheral component interconnect (Peripheral Component Interconnect, PCI for short) bus, an extended industry standard architecture (Extended Industry Standard Architecture, EISA for short) bus, or the like. The bus 914 may be classified into an address bus, a data bus, a control bus, and the like. For ease of representation, only one thick line is used in FIG. 9B for representation, but it does not indicate that there is only one bus or one type of bus.

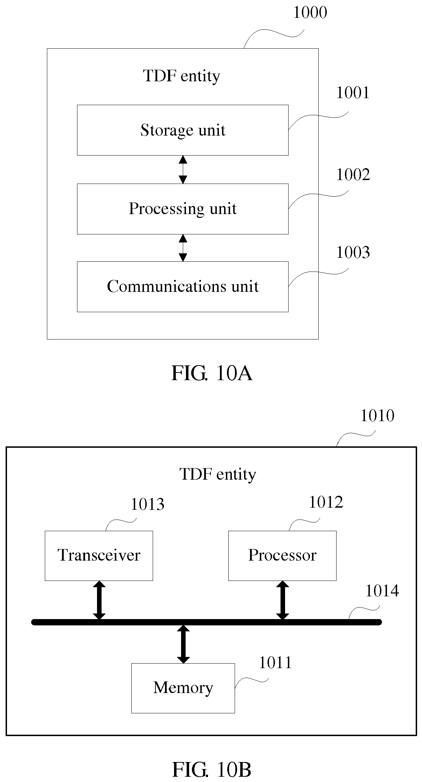

When an integrated unit is used, FIG. 10A shows a possible schematic structural diagram of a TDF entity in the foregoing embodiments. A TDF entity 1000 includes a processing unit 1002 and a communications unit 1003. The processing unit 1002 is configured to control and manage an action of the TDF entity. For example, the processing unit 1002 is configured to support the TDF entity in performing steps 502 and 503 in FIG. 5, steps 602, 603, and 604 in FIG. 6, steps 702, 703, and 706 in FIG. 7, and/or another procedure used for the technology described in this specification. The communications unit 1003 is configured to support the TDF entity in communicating with another network entity, for example, communicating with the functional module or the network entity shown in FIG. 1, FIG. 2, or FIG. 3. The TDF entity may further include a storage unit 1001, configured to store program code and data of the TDF entity.

The processing unit 1002 may be a processor or a controller, for example, may be a central processing unit (Central Processing Unit, CPU), a general purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The processing unit 1002 may implement or execute various example logical blocks, modules, and circuits described with reference to content provided in the present invention. The processor may also be a combination of processors performing a computing function, for example, one microprocessor or a combination of more than one microprocessor, or a combination of the DSP and a microprocessor. The communications unit 1003 may be a transceiver, a transceiver circuit, a communications interface, or the like. The storage unit 1001 may be a memory.

When the processing unit 1002 is the processor, the communications unit 1003 is the transceiver, and the storage unit 1001 is the memory, the TDF entity provided in this embodiment of the present invention may be a TDF entity shown in FIG. 10B.

Referring to FIG. 10B, a TDF entity 1010 includes a processor 1012, a transceiver 1013, a memory 1011, and a bus 1014. The transceiver 1013, the processor 1012, and the memory 1011 are interconnected by using the bus 1014. The bus 1014 may be a peripheral component interconnect (Peripheral Component Interconnect, PCI for short) bus, an extended industry standard architecture (Extended Industry Standard Architecture, EISA for short) bus, or the like. The bus 1014 may be classified into an address bus, a data bus, a control bus, and the like. For ease of representation, only one thick line is used to represent the bus in FIG. 10B, but this does not indicate that there is only one bus or only one type of bus.

It should be noted that when functions of the TDF entity and the PCEF entity are integrated into an integrated device, a structure of the integrated device may be shown in FIG. 9A, FIG. 9B, FIG. 10A, or FIG. 10B. For a detailed description of the structure of the integrated device, refer to the foregoing detailed description related to the TDF entity or the PCEF entity. Details are not described herein again. For example, when the structure of the integrated device is shown in FIG. 9A, the processing unit included in the integrated device may implement all functions performed by the TDF entity and the PCEF entity.

Method or algorithm steps described in combination with the content provided in the present invention may be implemented by hardware, or may be implemented by a processor by executing a software instruction. The software instruction may include a corresponding software module. The software module may be stored in a random access memory (Random Access Memory, RAM), a flash memory, a read-only memory (Read Only Memory, ROM), an erasable programmable read-only memory (Erasable Programmable ROM, EPROM), an electrically erasable programmable read-only memory (Electrically EPROM, EEPROM), a register, a hard disk, a mobile hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be located in the ASIC. In addition, the ASIC may be located in a core network interface device. Certainly, the processor and the storage medium may exist in the core network interface device as discrete components.

A person skilled in the art should be aware that in the foregoing one or more examples, functions described in the present invention may be implemented by hardware, software, firmware, or any combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general-purpose or dedicated computer.

## Claims

1. An event reporting method, comprising:
receiving (401), by a policy and charging rules function, PCRF, entity, a first message from a traffic detection function, TDF, entity, wherein the first message comprises a start event, and the start event is used to notify the PCRF entity that a data stream starts to be transmitted;
sending (402), by the PCRF entity, a second message to a policy and charging enforcement function, PCEF, entity or the TDF entity, wherein the second message is used by the PCEF entity or the TDF entity to send a stop event to the PCRF entity, and the stop event is used to notify the PCRF entity that the transmission of the data stream stops;
receiving (403), by the PCRF entity, the stop event from the PCEF entity or the TDF entity;
unbinding, by the PCRF entity, the data stream from a corresponding bearer.

2. The method according to claim 1, wherein
the sending (402), by the PCRF entity, a second message to the PCEF entity or the TDF entity comprises:
sending, by the PCRF entity, an identifier of the data stream and a reporting instruction of the stop event to the TDF entity, wherein the reporting instruction of the stop event is used to instruct the TDF entity to send the stop event to the PCRF entity when the transmission of the data stream stops; and
the method further comprises: sending, by the PCRF entity, a notification to the TDF entity, wherein the notification is used to notify the TDF entity that the reporting instruction of the stop event is valid before the transmission of the data stream stops; or
the sending (402), by the PCRF entity, a second message to the PCEF entity or the TDF entity comprises:
sending, by the PCEF entity, an identifier of the data stream, a reporting instruction of the stop event, and a notification to the TDF entity, wherein the reporting instruction of the stop event is used to instruct the TDF entity to send the stop event to the PCRF entity when the transmission of the data stream stops, and the notification is used to notify the TDF entity that the reporting instruction of the stop event is valid before the transmission of the data stream stops.

3. The method according to claim 1 or 2, further comprising:
sending (705), by the PCRF entity, modification information and an identifier of a downlink data stream of the data stream to the PCEF entity or the TDF entity, wherein the modification information is used by the PCEF entity or the TDF entity to send the stop event to the PCRF entity when the transmission of the downlink data stream of the data stream stops.

4. An event reporting method, comprising:
receiving (504), by a policy and charging enforcement function, PCEF, entity, a message from a policy and charging rules function PCRF entity, wherein the message is used by the PCEF entity to send a stop event to the PCRF entity, and the stop event is used to notify the PCRF entity that transmission of a data stream stops;
detecting (505), by the PCEF entity, the data stream based on the message; and
when the transmission of the data stream stops, sending (506), by the PCEF entity, the stop event to the PCRF entity, so that the PCRF entity learns that the transmission of the data stream stops, and performs a subsequent operation related to unbinding a bearer.

5. The method according to claim 4, further comprising:
receiving, by the PCEF entity, modification information and an identifier of a downlink data stream of the data stream from the PCRF entity, wherein the modification information is used by the PCEF entity to send the stop event to the PCRF entity when the transmission of the downlink data stream of the data stream stops.

6. An event reporting method, comprising:
sending, by a traffic detection function, TDF, entity, a first message to a policy and charging rules function, PCRF, entity, wherein the first message comprises a start event, and the start event is used to notify the PCRF entity that a data stream starts to be transmitted;
receiving, by the TDF entity, a second message from the PCRF entity, wherein the second message is used by the TDF entity to send a stop event to the PCRF entity, and the stop event is used to notify the PCRF entity that the transmission of the data stream stops;
detecting, by the TDF entity, the data stream based on the second message; and
when the transmission of the data stream stops, sending, by the TDF entity, the stop event to the PCRF entity, so that the PCRF entity learns that the transmission of the data stream stops, and performs a subsequent operation related to unbinding a bearer.

7. The method according to claim 6, wherein
the receiving, by the TDF entity, a second message from the PCRF entity comprises:
receiving, by the TDF entity, an identifier of the data stream and a reporting instruction of the stop event from the PCRF entity, wherein the reporting instruction of the stop event is used to instruct the TDF entity to send the stop event to the PCRF entity when the transmission of the data stream stops; and
the method further comprises: receiving, by the TDF entity, a notification from the PCRF entity, wherein the notification is used to notify the TDF entity that the reporting instruction of the stop event is valid before the transmission of the data stream stops; or
the receiving, by the TDF entity, a second message from the PCRF entity comprises:
receiving, by the TDF entity, an identifier of the data stream, a reporting instruction of the stop event, and a notification from the PCRF entity, wherein the reporting instruction of the stop event is used to instruct the TDF entity to send the stop event to the PCRF entity when the transmission of the data stream stops, and the notification is used to notify the TDF entity that the reporting instruction of the stop event is valid before the transmission of the data stream stops.

8. A policy and charging rules function, PCRF, entity (800), wherein the PCRF entity (800) comprises a processing unit (802) and a communications unit (803),
the processing unit (802) is configured to receive, by using the communications unit, a first message from a traffic detection function, TDF, entity, wherein the first message comprises a start event, and the start event is used to notify the PCRF entity that a data stream starts to be transmitted; is configured to send a second message to a policy and charging enforcement function, PCEF, entity or the TDF entity by using the communications unit (803), wherein the second message is used by the PCEF entity or the TDF entity to send a stop event to the PCRF entity, and the stop event is used to notify the PCRF entity that the transmission of the data stream stops; and is configured to receive, by using the communications unit (803), the stop event from the PCEF entity or the TDF entity, and is configured to unbind the data stream from a corresponding bearer.

9. The PCRF entity according to claim 8, wherein
the processing unit (802) is specifically configured to send an identifier of the data stream and a reporting instruction of the stop event to the TDF entity by using the communications unit, wherein the reporting instruction of the stop event is used to instruct the TDF entity to send the stop event to the PCRF entity when the transmission of the data stream stops; and the processing unit is further configured to send a notification to the TDF entity by using the communications unit, wherein the notification is used to notify the TDF entity that the reporting instruction of the stop event is valid before the transmission of the data stream stops; or
the processing unit (802) is specifically configured to send an identifier of the data stream, a reporting instruction of the stop event, and a notification to the TDF entity by using the communications unit, wherein the reporting instruction of the stop event is used to instruct the TDF entity to send the stop event to the PCRF entity when the transmission of the data stream stops, and the notification is used to notify the TDF entity that the reporting instruction of the stop event is valid before the transmission of the data stream stops.

10. The PCRF entity according to claim 8 or 9, wherein the processing unit is further configured to send modification information and an identifier of a downlink data stream of the data stream to the PCEF entity or the TDF entity by using the communications unit, wherein the modification information is used by the PCEF entity or the TDF entity to send the stop event to the PCRF entity when the transmission of the downlink data stream of the data stream stops.

11. A policy and charging enforcement function, PCEF, entity (900), comprising a processing unit (902) and a communications unit (903), wherein
the processing unit (902) is configured to receive, by using the communications unit (903), a message from a policy and charging rules function, PCRF, entity, wherein the message is used by the PCEF entity (900) to send a stop event to the PCRF entity, and the stop event is used to notify the PCRF entity that transmission of the data stream stops; is configured to detect the data stream based on the message; and is configured to send the stop event to the PCRF entity by using the communications unit (903) when the transmission of the data stream stops, so that the PCRF entity learns that the transmission of the data stream stops, and performs a subsequent operation related to unbinding a bearer.

12. The PCEF entity according to claim 11, wherein the message comprises 5-tuple information of the data stream and a reporting instruction of the stop event, the reporting instruction of the stop event is used to instruct the PCEF entity to send the stop event to the PCRF entity when the transmission of the data stream stops, and the processing unit is specifically configured to detect a data stream corresponding to the 5-tuple information of the data stream.

13. A traffic detection function, TDF, entity (1000), comprising a processing unit (1002) and a communications unit (1003), wherein
the processing unit (1002) is configured to send a first message to a policy and charging rules function, PCRF, entity by using the communications unit (1003), wherein the first message comprises a start event, and the start event is used to notify the PCRF entity that a data stream starts to be transmitted; is configured to receive, by using the communications unit (1003), a second message from the PCRF entity, wherein the second message is used by the TDF entity to send a stop event to the PCRF entity, and the stop event is used to notify the PCRF entity that the transmission of the data stream stops; is configured to detect the data stream based on the second message; and is configured to send the stop event to the PCRF entity by using the communications unit when the transmission of the data stream stops, so that the PCRF entity learns that the transmission of the data stream stops, and performs a subsequent operation related to unbinding a bearer.

14. The TDF entity according to claim 13, wherein
the processing unit is specifically configured to receive, by using the communications unit, an identifier of the data stream and a reporting instruction of the stop event from the PCRF entity, wherein the reporting instruction of the stop event is used to instruct the TDF entity to send the stop event to the PCRF entity when the transmission of the data stream stops; and the processing unit is further configured to receive, by using the communications unit, a notification from the PCRF entity, wherein the notification is used to notify the TDF entity that the reporting instruction of the stop event is valid before the transmission of the data stream stops; or
the processing unit is specifically configured to receive, by using the communications unit, an identifier of the data stream, a reporting instruction of the stop event, and a notification from the PCRF entity, wherein the reporting instruction of the stop event is used to instruct the TDF entity to send the stop event to the PCRF entity when the transmission of the data stream stops, and the notification is used to notify the TDF entity that the reporting instruction of the stop event is valid before the transmission of the data stream stops.

15. A communications system, comprising the PCRF entity according to any one of claims 8 to 10 and the TDF entity according to any one of claims 13 to 14; or comprising the PCRF entity according to any one of claims 8 to 10, the PCEF entity according to any one of claims 11 to 12, and the TDF entity according to any one of claims 13 to 14.

## Patentansprüche

1. Ereignismeldeverfahren, Folgendes umfassend:
Empfangen (401), durch eine Richtlinien- und Gebührenregel-Funktion, PCRF-Entität, einer ersten Nachricht von einer Verkehrserkennungsfunktion, TDF-Entität, wobei die erste Nachricht ein Startereignis umfasst und wobei das Startereignis verwendet wird, um die PCRF-Entität zu benachrichtigen, dass die Übertragung eines Datenstroms beginnt;
Senden (402), durch die PCRF-Entität, einer zweiten Nachricht an eine Richtlinien- und Gebührenerzwingungsfunktion, PCEF-Entität oder die TDF-Entität, wobei die zweite Nachricht von der PCEF-Entität oder der TDF-Entität verwendet wird, um ein Stopp-Ereignis an die PCRF-Entität zu senden, und wobei das Stopp-Ereignis verwendet wird, um die PCRF-Entität zu benachrichtigen, dass die Übertragung des Datenstroms stoppt;
Empfangen (403), durch die PCRF-Entität, des Stopp-Ereignisses von der PCEF-Entität oder der TDF-Entität;
Aufheben der Bindung, durch die PCRF-Entität, des Datenstroms von einem entsprechenden Träger.

2. Verfahren nach Anspruch 1, wobei das Senden (402,) durch die PCRF-Entität einer zweiten Nachricht an die PCEF-Entität oder die TDF-Entität Folgendes umfasst:
Senden, durch die PCRF-Entität, einer Kennung des Datenstroms und einer Meldeanweisung des Stopp-Ereignisses an die TDF-Entität, wobei mit der Meldeanweisung des Stopp-Ereignisses die TDF-Entität angewiesen wird, das Stopp-Ereignis an die PCRF-Entität zu senden, wenn die Übertragung des Datenstroms stoppt; und
das Verfahren ferner Folgendes umfassend:
Senden, durch die PCRF-Entität, einer Benachrichtigung an die TDF-Entität, wobei die Benachrichtigung verwendet wird, um der TDF-Entität mitzuteilen, dass die Meldeanweisung des Stopp-Ereignisses gültig ist, bevor die Übertragung des Datenstroms stoppt; oder
wobei das Senden (402), durch die PCRF-Entität, einer zweiten Nachricht an die PCEF-Entität oder die TDF-Entität Folgendes umfasst:
Senden, durch die PCEF-Entität, einer Kennung des Datenstroms, einer Meldeanweisung des Stopp-Ereignisses und einer Benachrichtigung an die TDF-Entität, wobei die Meldeanweisung des Stopp-Ereignisses verwendet wird, um die TDF-Entität anzuweisen, das Stopp-Ereignis an die PCRF-Entität zu senden, wenn die Übertragung des Datenstroms stoppt, und wobei die Benachrichtigung verwendet wird, um die TDF-Entität zu benachrichtigen, dass die Meldeanweisung des Stopp-Ereignisses gültig ist, bevor die Übertragung des Datenstroms stoppt.

3. Verfahren nach Anspruch 1 oder 2, ferner Folgendes umfassend:
Senden (705), durch die PCRF-Entität, von Modifikationsinformationen und einer Kennung eines Downlink-Datenstroms des Datenstroms an die PCEF-Entität oder die TDF-Entität, wobei die Modifikationsinformationen von der PCEF-Entität oder der TDF-Entität verwendet werden, um das Stopp-Ereignis an die PCRF-Entität zu senden, wenn die Übertragung des Downlink-Datenstroms des Datenstroms stoppt.

4. Ereignismeldeverfahren, Folgendes umfassend:
Empfangen (504), durch eine Richtlinien- und Gebührenerzwingungsfunktion, PCEF-Entität, einer Nachricht von einer Richtlinien- und Gebührenregel-Funktion, PCRF-Entität, wobei die Nachricht von der PCEF-Entität verwendet wird, um ein Stopp-Ereignis an die PCRF-Entität zu senden, und wobei das Stopp-Ereignis verwendet wird, um die PCRF-Entität zu benachrichtigen, dass die Übertragung eines Datenstroms stoppt;
Erkennen (505), durch die PCEF-Entität, des Datenstroms basierend auf der Nachricht; und
wenn die Übertragung des Datenstroms stoppt, Senden (506), durch die PCEF-Entität, des Stopp-Ereignisses an die PCRF-Entität, sodass die PCRF-Entität erfährt, dass die Übertragung des Datenstroms stoppt, und eine nachfolgende Operation im Zusammenhang mit der Aufhebung der Bindung eines Trägers durchführt.

5. Verfahren nach Anspruch 4, ferner Folgendes umfassend:
Empfangen, durch die PCEF-Entität, von Modifikationsinformationen und einer Kennung eines Downlink-Datenstroms des Datenstroms von der PCRF-Entität, wobei die Modifikationsinformationen von der PCEF-Entität verwendet werden, um das Stopp-Ereignis an die PCRF-Entität zu senden, wenn die Übertragung des Downlink-Datenstroms des Datenstroms stoppt.

6. Ereignismeldeverfahren, Folgendes umfassend:
Senden, durch eine Verkehrserkennungsfunktion, TDF, -Entität, einer ersten Nachricht an eine Richtlinien- und Gebührenregel-Funktion, PCRF-Entität, wobei die erste Nachricht ein Startereignis umfasst und wobei das Startereignis verwendet wird, um die PCRF-Entität zu benachrichtigen, dass die Übertragung eines Datenstroms beginnt;
Empfangen, durch die TDF-Entität, einer zweiten Nachricht von der PCRF-Entität, wobei die zweite Nachricht von der TDF-Entität verwendet wird, um ein Stopp-Ereignis an die PCRF-Entität zu senden, und wobei das Stopp-Ereignis verwendet wird, um der PCRF-Entität mitzuteilen, dass die Übertragung des Datenstroms stoppt;
Erkennen, durch die TDF-Entität, des Datenstroms basierend auf der zweiten Nachricht; und
wenn die Übertragung des Datenstroms stoppt, Senden, durch die TDF-Entität, des Stopp-Ereignisses an die PCRF-Entität, sodass die PCRF-Entität erfährt, dass die Übertragung des Datenstroms stoppt, und eine nachfolgende Operation im Zusammenhang mit der Aufhebung der Bindung eines Trägers durchführt.

7. Verfahren nach Anspruch 6, wobei das Empfangen, durch die TDF-Entität, einer zweiten Nachricht von der PCRF-Entität Folgendes umfasst:
Empfangen, durch die TDF-Entität, einer Kennung des Datenstroms und einer Meldeanweisung des Stopp-Ereignisses von der PCRF-Entität, wobei die Meldeanweisung des Stopp-Ereignisses verwendet wird, um die TDF-Entität anzuweisen, das Stopp-Ereignis an die PCRF-Entität zu senden, wenn die Übertragung des Datenstroms stoppt; und
das Verfahren ferner Folgendes umfassend:
Empfangen, durch die TDF-Entität, einer Benachrichtigung von der PCRF-Entität, wobei die Benachrichtigung verwendet wird, um der TDF-Entität mitzuteilen, dass die Meldeanweisung des Stopp-Ereignisses gültig ist, bevor die Übertragung des Datenstroms stoppt; oder
wobei das Empfangen, durch die TDF-Entität, einer zweiten Nachricht von der PCRF-Entität Folgendes umfasst:
Empfangen, durch die TDF-Entität, einer Kennung des Datenstroms, einer Meldeanweisung des Stopp-Ereignisses und einer Benachrichtigung von der PCRF-Entität, wobei die Meldeanweisung des Stopp-Ereignisses verwendet wird, um die TDF-Entität anzuweisen, das Stopp-Ereignis an die PCRF-Entität zu senden, wenn die Übertragung des Datenstroms stoppt, und wobei die Benachrichtigung verwendet wird, um die TDF-Entität zu benachrichtigen, dass die Meldeanweisung des Stopp-Ereignisses gültig ist, bevor die Übertragung des Datenstroms stoppt.

8. Richtlinien- und Gebührenregel-Funktion, PCRF-Entität (800), wobei die PCRF-Entität (800) eine Verarbeitungseinheit (802) und eine Kommunikationseinheit (803) umfasst, wobei die Verarbeitungseinheit (802) dafür konfiguriert ist, unter Verwendung der Kommunikationseinheit eine erste Nachricht von einer Verkehrserkennungsfunktion, TDF-Entität, zu empfangen, wobei die erste Nachricht ein Startereignis umfasst und wobei das Startereignis verwendet wird, um der PCRF-Entität mitzuteilen, dass die Übertragung eines Datenstroms beginnt;
und dafür konfiguriert ist, eine zweite Nachricht an eine Richtlinien- und Gebühreneintreibungsfunktion, PCEF-Entität oder die TDF-Entität unter Verwendung der Kommunikationseinheit (803) zu senden, wobei die zweite Nachricht von der PCEF-Entität oder der TDF-Entität verwendet wird, um ein Stopp-Ereignis an die PCRF-Entität zu senden, und wobei das Stopp-Ereignis verwendet wird, um die PCRF-Entität zu benachrichtigen, dass die Übertragung des Datenstroms stoppt; und
dafür konfiguriert ist, unter Verwendung der Kommunikationseinheit (803) das Stopp-Ereignis von der PCEF-Entität oder der TDF-Entität zu empfangen, und dafür konfiguriert ist, die Bindung des Datenstroms von einem entsprechenden Träger aufzuheben.

9. PCRF-Entität nach Anspruch 8, wobei die Verarbeitungseinheit (802) speziell dafür konfiguriert ist, eine Kennung des Datenstroms und eine Meldeanweisung des Stopp-Ereignisses an die TDF-Entität unter Verwendung der Kommunikationseinheit zu senden, wobei die Meldeanweisung des Stopp-Ereignisses verwendet wird, um die TDF-Entität anzuweisen, das Stopp-Ereignis an die PCRF-Entität zu senden, wenn die Übertragung des Datenstroms stoppt; und
wobei die Verarbeitungseinheit ferner dafür konfiguriert ist, unter Verwendung der Kommunikationseinheit eine Benachrichtigung an die TDF-Entität zu senden, wobei die Benachrichtigung verwendet wird, um der TDF-Entität mitzuteilen, dass die Meldeanweisung des Stopp-Ereignisses gültig ist, bevor die Übertragung des Datenstroms stoppt; oder
wobei die Verarbeitungseinheit (802) speziell dafür konfiguriert ist, eine Kennung des Datenstroms, eine Meldeanweisung des Stopp-Ereignisses und eine Benachrichtigung an die TDF-Entität unter Verwendung der Kommunikationseinheit zu senden, wobei die Meldeanweisung des Stopp-Ereignisses verwendet wird, um die TDF-Entität anzuweisen, das Stopp-Ereignis an die PCRF-Entität zu senden, wenn die Übertragung des Datenstroms stoppt, und wobei die Benachrichtigung verwendet wird, um die TDF-Entität zu benachrichtigen, dass die Meldeanweisung des Stopp-Ereignisses gültig ist, bevor die Übertragung des Datenstroms stoppt.

10. PCRF-Entität nach Anspruch 8 oder 9, wobei die Verarbeitungseinheit ferner dafür konfiguriert ist, unter Verwendung der Kommunikationseinheit Modifikationsinformationen und eine Kennung eines Downlink-Datenstroms des Datenstroms an die PCEF-Entität oder die TDF-Entität zu senden, wobei die Modifikationsinformationen von der PCEF-Entität oder der TDF-Entität verwendet werden, um das Stopp-Ereignis an die PCRF-Entität zu senden, wenn die Übertragung des Downlink-Datenstroms des Datenstroms stoppt.

11. Richtlinien- und Gebühreneintreibungsfunktion, PCEF-Entität (900), umfassend eine Verarbeitungseinheit (902) und eine Kommunikationseinheit (903), wobei die Verarbeitungseinheit (902) dafür konfiguriert ist, unter Verwendung der Kommunikationseinheit (903) eine Nachricht von einer Richtlinien- und Gebühreneintreibungsfunktion, PCRF-Entität zu empfangen, wobei die Nachricht von der PCEF-Entität (900) verwendet wird, um ein Stopp-Ereignis an die PCRF-Entität zu senden, und das Stopp-Ereignis verwendet wird, um der PCRF-Entität mitzuteilen, dass die Übertragung des Datenstroms stoppt;
dafür konfiguriert ist, den Datenstrom basierend auf der Nachricht zu erkennen; und
dafür konfiguriert ist, das Stopp-Ereignis unter Verwendung der Kommunikationseinheit (903) an die PCRF-Entität zu senden, wenn die Übertragung des Datenstroms stoppt, sodass die PCRF-Entität erfährt, dass die Übertragung des Datenstroms stoppt, und eine nachfolgende Operation im Zusammenhang mit der Aufhebung der Bindung eines Trägers durchführt.

12. PCEF-Entität nach Anspruch 11, wobei die Nachricht 5-Tupel-Informationen des Datenstroms und eine Meldeanweisung des Stopp-Ereignisses umfasst, wobei die Meldeanweisung des Stopp-Ereignisses verwendet wird, um die PCEF-Entität anzuweisen, das Stopp-Ereignis an die PCRF-Entität zu senden, wenn die Übertragung des Datenstroms stoppt, und wobei die Verarbeitungseinheit speziell dafür konfiguriert ist, einen Datenstrom zu erkennen, der den 5-Tupel-Informationen des Datenstroms entspricht.

13. Verkehrserkennungsfunktion, TDF-Entität (1000), umfassend eine Verarbeitungseinheit (1002) und eine Kommunikationseinheit (1003), wobei die Verarbeitungseinheit (1002) dafür konfiguriert ist, um unter Verwendung der Kommunikationseinheit (1003) eine erste Nachricht an eine Richtlinien- und Gebührenregel-Funktion, PCRF-Entität zu senden, wobei die erste Nachricht ein Startereignis umfasst und wobei das Startereignis verwendet wird, um der PCRF-Entität mitzuteilen, dass die Übertragung eines Datenstroms beginnt;
und dafür konfiguriert ist, unter Verwendung der Kommunikationseinheit (1003) eine zweite Nachricht von der PCRF-Entität zu empfangen, wobei die zweite Nachricht von der TDF-Entität verwendet wird, um ein Stopp-Ereignis an die PCRF-Entität zu senden, und das Stopp-Ereignis verwendet wird, um der PCRF-Entität mitzuteilen, dass die Übertragung des Datenstroms stoppt;
dafür konfiguriert ist, den Datenstrom basierend auf der zweiten Nachricht zu erkennen; und
dafür konfiguriert ist, das Stopp-Ereignis unter Verwendung der Kommunikationseinheit an die PCRF-Entität zu senden, wenn die Übertragung des Datenstroms stoppt, sodass die PCRF-Entität erfährt, dass die Übertragung des Datenstroms stoppt, und eine nachfolgende Operation im Zusammenhang mit der Aufhebung der Bindung eines Trägers durchführt.

14. TDF-Entität nach Anspruch 13, wobei die Verarbeitungseinheit speziell dafür konfiguriert ist, unter Verwendung der Kommunikationseinheit eine Kennung des Datenstroms und eine Meldeanweisung des Stopp-Ereignisses von der PCRF-Entität zu empfangen, wobei die Meldeanweisung des Stopp-Ereignisses verwendet wird, um die TDF-Entität anzuweisen, das Stopp-Ereignis an die PCRF-Entität zu senden, wenn die Übertragung des Datenstroms stoppt; und
wobei die Verarbeitungseinheit ferner dafür konfiguriert ist, unter Verwendung der Kommunikationseinheit eine Benachrichtigung von der PCRF-Entität zu empfangen, wobei die Benachrichtigung verwendet wird, um der TDF-Entität mitzuteilen, dass die Meldeanweisung des Stopp-Ereignisses gültig ist, bevor die Übertragung des Datenstroms stoppt; oder
wobei die Verarbeitungseinheit speziell dafür konfiguriert ist, unter Verwendung der Kommunikationseinheit eine Kennung des Datenstroms, eine Meldeanweisung des Stopp-Ereignisses und eine Benachrichtigung von der PCRF-Entität zu empfangen, wobei die Meldeanweisung des Stopp-Ereignisses verwendet wird, um die TDF-Entität anzuweisen, das Stopp-Ereignis an die PCRF-Entität zu senden, wenn die Übertragung des Datenstroms stoppt, und die Benachrichtigung verwendet wird, um die TDF-Entität zu benachrichtigen, dass die Meldeanweisung des Stopp-Ereignisses gültig ist, bevor die Übertragung des Datenstroms stoppt.

15. Kommunikationssystem, umfassend die PCRF-Entität nach einem der Ansprüche 8 bis 10 und die TDF-Entität nach einem der Ansprüche 13 bis 14; oder
umfassend die PCRF-Entität nach einem der Ansprüche 8 bis 10, die PCEF-Entität nach einem der Ansprüche 11 bis 12 und die TDF-Entität nach einem der Ansprüche 13 bis 14.

## Revendications

1. Procédé de rapport d'événement, comprenant : la réception (401), par une entité de fonction de politique et de règles de facturation, PCRF, d'un premier message provenant d'une entité de fonction de détection de trafic, TDF, le premier message comprenant un événement de début et l'événement de début étant utilisé pour notifier à l'entité de PCRF qu'un flux de données commence à être transmis ; l'envoi (402), par l'entité de PCRF, d'un second message à une entité de fonction d'application de politique et de facturation, PCEF, ou à l'entité de TDF, le second message étant utilisé par l'entité de PCEF ou l'entité de TDF pour envoyer un événement d'arrêt à l'entité de PCRF et l'événement d'arrêt étant utilisé pour notifier à l'entité de PCRF que la transmission du flux de données s'arrête ; la réception (403), par l'entité de PCRF, de l'événement d'arrêt provenant de l'entité de PCEF ou de l'entité de TDF ; la déliaison, par l'entité de PCRF, du flux de données provenant d'une porteuse correspondante.

2. Procédé selon la revendication 1, dans lequel l'envoi (402), par l'entité de PCRF, d'un second message à l'entité de PCEF ou à l'entité de TDF comprend : l'envoi, par l'entité de PCRF, d'un identifiant du flux de données et d'une instruction de rapport de l'événement d'arrêt à l'entité de TDF, l'instruction de rapport de l'événement d'arrêt étant utilisée pour demander à l'entité de TDF d'envoyer l'événement d'arrêt à l'entité de PCRF lorsque la transmission du flux de données s'arrête ; et le procédé comprend en outre : l'envoi, par l'entité de PCRF, d'une notification à l'entité de TDF, la notification étant utilisée pour notifier à l'entité de TDF que l'instruction de rapport de l'événement d'arrêt est valide avant l'arrêt de la transmission du flux de données ; ou l'envoi (402), par l'entité de PCRF, d'un second message à l'entité de PCEF ou à l'entité de TDF comprend : l'envoi, par l'entité de PCEF, d'un identifiant du flux de données, d'une instruction de rapport de l'événement d'arrêt et d'une notification à l'entité de TDF, l'instruction de rapport de l'événement d'arrêt étant utilisée pour demander à l'entité de TDF d'envoyer l'événement d'arrêt à l'entité de PCRF lorsque la transmission du flux de données s'arrête et la notification étant utilisée pour notifier à l'entité de TDF que l'instruction de rapport de l'événement d'arrêt est valide avant l'arrêt de la transmission du flux de données.

3. Procédé selon la revendication 1 ou 2, comprenant en outre : l'envoi (705), par l'entité de PCRF, d'informations de modification et d'un identifiant d'un flux de données de liaison descendante du flux de données à l'entité de PCEF ou à l'entité de TDF, les informations de modification étant utilisées par l'entité de PCEF ou l'entité de TDF pour envoyer l'événement d'arrêt à l'entité de PCRF lorsque la transmission du flux de données de liaison descendante du flux de données s'arrête.

4. Procédé de rapport d'événement, comprenant : la réception (504), par une entité de fonction d'application de politique et de facturation, PCEF, d'un message provenant d'une entité de fonction de politique et de règles de facturation, PCRF, le message étant utilisé par l'entité de PCEF pour envoyer un événement d'arrêt à l'entité de PCRF et l'événement d'arrêt étant utilisé pour notifier à l'entité de PCRF que la transmission d'un flux de données s'arrête ; la détection (505), par l'entité de PCEF, du flux de données sur la base du message ; et lorsque la transmission du flux de données s'arrête, l'envoi (506), par l'entité de PCEF, de l'événement d'arrêt à l'entité de PCRF, de sorte que l'entité de PCRF apprend que la transmission du flux de données s'arrête et effectue une opération ultérieure associée à la déliaison d'une porteuse.

5. Procédé selon la revendication 4, comprenant en outre : la réception, par l'entité de PCEF, des informations de modification et d'un identifiant d'un flux de données de liaison descendante du flux de données provenant de l'entité de PCRF, les informations de modification étant utilisées par l'entité de PCEF pour envoyer l'événement d'arrêt à l'entité de PCRF lorsque la transmission du flux de données de liaison descendante du flux de données s'arrête.

6. Procédé de rapport d'événement, comprenant : l'envoi, par une entité de fonction de détection de trafic, TDF, d'un premier message à une entité de fonction de politique et de règles de facturation, PCRF, le premier message comprenant un événement de début et l'événement de début étant utilisé pour notifier à l'entité de PCRF qu'un flux de données commence à être transmis ; la réception, par l'entité de TDF, d'un second message provenant de l'entité de PCRF, le second message étant utilisé par l'entité de TDF pour envoyer un événement d'arrêt à l'entité de PCRF et l'événement d'arrêt étant utilisé pour notifier à l'entité de PCRF que la transmission du flux de données s'arrête ; la détection, par l'entité de TDF, du flux de données sur la base du second message ; et lorsque la transmission du flux de données s'arrête, l'envoi, par l'entité de TDF, de l'événement d'arrêt à l'entité de PCRF, de sorte que l'entité de PCRF apprend que la transmission du flux de données s'arrête et effectue une opération ultérieure associée à la déliaison d'une porteuse.

7. Procédé selon la revendication 6, dans lequel la réception, par l'entité de TDF, d'un second message provenant de l'entité de PCRF comprend : la réception, par l'entité de TDF, d'un identifiant du flux de données et d'une instruction de rapport de l'événement d'arrêt provenant de l'entité de PCRF, l'instruction de rapport de l'événement d'arrêt étant utilisée pour demander à l'entité de TDF d'envoyer l'événement d'arrêt à l'entité de PCRF lorsque la transmission du flux de données s'arrête ; et le procédé comprend en outre : la réception, par l'entité de TDF, d'une notification provenant de l'entité de PCRF, la notification étant utilisée pour notifier à l'entité de TDF que l'instruction de rapport de l'événement d'arrêt est valide avant l'arrêt de la transmission du flux de données ; ou la réception, par l'entité de TDF, d'un second message provenant de l'entité de PCRF comprend : la réception, par l'entité de TDF, d'un identifiant du flux de données, d'une instruction de rapport de l'événement d'arrêt et d'une notification provenant de l'entité de PCRF, l'instruction de rapport de l'événement d'arrêt étant utilisée pour demander à l'entité de TDF d'envoyer l'événement d'arrêt à l'entité de PCRF lorsque la transmission du flux de données s'arrête et la notification étant utilisée pour notifier à l'entité de TDF que l'instruction de rapport de l'événement d'arrêt est valide avant l'arrêt de la transmission du flux de données.

8. Entité de fonction de politique et de règles de facturation, PCRF, (800), dans laquelle l'entité de PCRF (800) comprend une unité de traitement (802) et une unité de communication (803), l'unité de traitement (802) est configurée pour recevoir, à l'aide de l'unité de communication, un premier message provenant d'une entité de fonction de détection de trafic, TDF, le premier message comprenant un événement de début et l'événement de début étant utilisé pour notifier à l'entité de PCRF qu'un flux de données commence à être transmis ; est configurée pour envoyer un second message à une entité de fonction d'application de politique et de facturation, PCEF, à l'aide de l'unité de communication (803), le second message étant utilisé par l'entité de PCEF ou l'entité de TDF pour envoyer un événement d'arrêt à l'entité de PCRF et l'événement d'arrêt étant utilisé pour notifier à l'entité de PCRF que la transmission du flux de données s'arrête ; et est configurée pour recevoir, à l'aide de l'unité de communication (803), l'événement d'arrêt provenant de l'entité de PCEF ou de l'entité de TDF et est configurée pour délier le flux de données provenant d'une porteuse correspondante.

9. Entité de PCRF selon la revendication 8, dans laquelle l'unité de traitement (802) est plus particulièrement configurée pour envoyer un identifiant du flux de données et une instruction de rapport de l'événement d'arrêt à l'entité de TDF à l'aide de l'unité de communication, l'instruction de rapport de l'événement d'arrêt étant utilisée pour demander à l'entité de TDF d'envoyer l'événement d'arrêt à l'entité de PCRF lorsque la transmission du flux de données s'arrête ; et l'unité de traitement est configurée en outre pour envoyer une notification à l'entité de TDF à l'aide de l'unité de communication, la notification étant utilisée pour notifier à l'entité de TDF que l'instruction de rapport de l'événement d'arrêt est valide avant l'arrêt de la transmission du flux de données ; ou l'unité de traitement (802) est plus particulièrement configurée pour envoyer un identifiant du flux de données, une instruction de rapport de l'événement d'arrêt et une notification à l'entité de TDF à l'aide de l'unité de communication, l'instruction de rapport de l'événement d'arrêt étant utilisée pour demander à l'entité de TDF d'envoyer l'événement d'arrêt à l'entité de PCRF lorsque la transmission du flux de données s'arrête et la notification étant utilisée pour notifier à l'entité de TDF que l'instruction de rapport de l'événement d'arrêt est valide avant l'arrêt de la transmission du flux de données.

10. Entité de PCRF selon la revendication 8 ou 9, dans laquelle l'unité de traitement est configurée en outre pour envoyer des informations de modification et un identifiant d'un flux de données de liaison descendante du flux de données à l'entité de PCEF ou à l'entité de TDF à l'aide de l'unité de communication, les informations de modification étant utilisées par l'entité de PCEF ou l'entité de TDF pour envoyer l'événement d'arrêt à l'entité de PCRF lorsque la transmission du flux de données de liaison descendante du flux de données s'arrête.

11. Entité de fonction d'application de politique et de facturation, PCEF, (900) comprenant une unité de traitement (902) et une unité de communication (903), dans laquelle l'unité de traitement (902) est configurée pour recevoir, à l'aide de l'unité de communication (903), un message provenant d'une entité de fonction de politique et de règles de facturation, PCRF, le message étant utilisé par l'entité de PCEF (900) pour envoyer un événement d'arrêt à l'entité de PCRF et l'événement d'arrêt étant utilisé pour notifier à l'entité de PCRF que la transmission du flux de données s'arrête ; est configurée pour détecter le flux de données sur la base du message ; et est configurée pour envoyer l'événement d'arrêt à l'entité de PCRF à l'aide de l'unité de communication (903) lorsque la transmission du flux de données s'arrête, de sorte que l'entité de PCRF apprend que la transmission du flux de données s'arrête et effectue une opération ultérieure associée à la déliaison d'une porteuse.

12. Entité de PCEF selon la revendication 11, dans laquelle le message comprend des informations à 5 tuples du flux de données et une instruction de rapport de l'événement d'arrêt, l'instruction de rapport de l'événement d'arrêt est utilisée pour demander à l'entité de PCEF d'envoyer l'événement d'arrêt à l'entité de PCRF lorsque la transmission du flux de données s'arrête et l'unité de traitement est plus particulièrement configurée pour détecter un flux de données correspondant aux informations à 5 tuples du flux de données.

13. Entité de fonction de détection de trafic, TDF, (1000), comprenant une unité de traitement (1002) et une unité de communication (1003), dans laquelle l'unité de traitement (1002) est configurée pour envoyer un premier message à une entité de fonction de politique et de règles de facturation, PCRF, à l'aide de l'unité de communication (1003), le premier message comprenant un événement de début et l'événement de début étant utilisé pour notifier à l'entité de PCRF qu'un flux de données commence à être transmis ; est configurée pour recevoir, à l'aide de l'unité de communication (1003), un second message provenant de l'entité de PCRF, le second message étant utilisé par l'entité de TDF pour envoyer un événement d'arrêt à l'entité de PCRF et l'événement d'arrêt étant utilisé pour notifier à l'entité de PCRF que la transmission du flux de données s'arrête ; est configurée pour détecter le flux de données sur la base du second message ; et est configurée pour envoyer l'événement d'arrêt à l'entité de PCRF à l'aide de l'unité de communication lorsque la transmission du flux de données s'arrête, de sorte que l'entité de PCRF apprend que la transmission du flux de données s'arrête et effectue une opération ultérieure associée à la déliaison d'une porteuse.

14. Entité de TDF selon la revendication 13, dans laquelle l'unité de traitement est plus particulièrement configurée pour recevoir, à l'aide de l'unité de communication, un identifiant du flux de données et une instruction de rapport de l'événement d'arrêt provenant de l'entité de PCRF, l'instruction de rapport de l'événement d'arrêt étant utilisée pour demander à l'entité de TDF d'envoyer l'événement d'arrêt à l'entité de PCRF lorsque la transmission du flux de données s'arrête ; et l'unité de traitement est configurée en outre pour recevoir, à l'aide de l'unité de communication, une notification provenant de l'entité de PCRF, la notification étant utilisée pour notifier à l'entité de TDF que l'instruction de rapport de l'événement d'arrêt est valide avant l'arrêt de la transmission du flux de données ; ou l'unité de traitement est plus particulièrement configurée pour recevoir, à l'aide de l'unité de communication, un identifiant du flux de données, une instruction de rapport de l'événement d'arrêt et une notification provenant de l'entité de PCRF, l'instruction de rapport de l'événement d'arrêt étant utilisée pour demander à l'entité de TDF d'envoyer l'événement d'arrêt à l'entité de PCRF lorsque la transmission du flux de données s'arrête et la notification est utilisée pour notifier à l'entité de TDF que l'instruction de rapport de l'événement d'arrêt est valide avant l'arrêt de la transmission du flux de données.

15. Système de communication, comprenant l'entité de PCRF selon l'une quelconque des revendications 8 à 10 et l'entité de TDF selon l'une quelconque des revendications 13 à 14 ; ou comprenant l'entité de PCRF selon l'une quelconque des revendications 8 à 10, l'entité de PCEF selon l'une quelconque des revendications 11 à 12 et l'entité de TDF selon l'une quelconque des revendications 13 à 14.
